# EUROPEAN PATENT APPLICATION

(11) **EP 4 737 149 A1**
(43) Date of publication of application: **06.05.2026**
(21) Application number: 24830917.1
(22) Date of filing: 27.06.2024
(51) Int. Cl.: B60J 5/04, B60J 5/06, B62D 25/02, B62D 25/06

(54) **ROOF SIDE RAIL STRUCTURE, VEHICLE BODY STRUCTURE, AND VEHICLE**

(30) Priority: 28.06.2023 CN 202310776868
(71) Applicant: Beijing Chehejia Automobile Technology Co., Ltd., Beijing 101300 (CN)
(72) Inventor: JIANG, Fuxin, Beijing 101300 (CN)
(74) Representative: Maiwald GmbH
(86) International application number: PCT/CN2024/102111
(87) International publication number: WO 2025/002285

(57) **Abstract**

A roof side rail structure (100), a vehicle body structure, and a vehicle. The roof side rail structure (100) comprises a roof side rail inner plate (10), a roof side rail reinforcing plate (20), a guide rail mounting plate (30), a side wall outer plate (60) and a guide rail (40) arranged on the guide rail mounting plate (30). The roof side rail inner plate (10), the roof side rail reinforcing plate (20) and the guide rail mounting plate (30) are connected end to end to form a first cavity (50). The side wall outer plate (60) is bent in a direction away from the first cavity (50) and is connected to the roof side rail reinforcing plate (20) to form a second cavity (70). The guide rail (40) is located on the side of the guide rail mounting plate (30) facing away from the first cavity (50) in a first direction (X). In the first direction (X), the projection of the first cavity (50) at least partially overlaps the projection of the second cavity (70), the projection of the guide rail (40) being located in the overlapping part of the projection of the first cavity (50) and the projection of the second cavity (70). The present application can effectively improve the structural strength of roof side rails and further improve the reliability of vehicles.

## Description

### CROSS-REFERENCE TO RELATED APPLICATION

The present invention is based on and claims priority to Chinese Patent Application No. 202310776868.X, filed on June 28, 2023, the entire content of which is incorporated into the present invention by reference.

### FIELD

The present invention relates to the field of automotive technologies, and more particularly to a roof side rail structure, a vehicle body structure, and a vehicle.

### BACKGROUND

With the rapid development of the economy and the automotive industry, a demand for vehicle aesthetics and comfort is increasing. For this reason, a B-pillarless vehicle model has been gaining growing popularity. For a vehicle, a B-pillar is a critical component that enhances safety of the vehicle, as the B-pillar may effectively prevent deformation of a passenger compartment during rollovers or overturns of the vehicle, thereby protecting occupants inside the vehicle.

Due to the elimination of the B-pillar structure, a roof side rail of the vehicle needs to withstand greater loads. Currently, most B-pillarless vehicle models are equipped with a sliding door. The layout requirements for a guide rail on the sliding door may result in an insufficient cavity space in the roof side rail structure to provide supporting force, thus leading to a lower structural strength of the roof side rail structure, and consequently the overall reliability of the vehicle is lower. In light of this, there is an urgent need to improve the design of the roof side rail structure.

### SUMMARY

In view of the aforementioned issues, the present invention provides a roof side rail structure, a vehicle body structure, and a vehicle, which may effectively enhance the structural strength of the roof side rail and improve the reliability of the vehicle.

In a first aspect, embodiments of the present invention provide a roof side rail structure. The roof side rail structure includes a roof side rail inner plate, a roof side rail reinforcement plate, a guide rail mounting plate, a side outer plate, and a guide rail arranged at the guide rail mounting plate. The roof side rail inner plate, the roof side rail reinforcement plate, and the guide rail mounting plate are connected end to end to form a first cavity; the side outer plate is bent in a direction facing away from the first cavity and is connected to the roof side rail reinforcement plate to form a second cavity; and the guide rail is located on a side of the guide rail mounting plate facing away from the first cavity along a first direction. A projection of the first cavity along the first direction at least partially overlaps a projection of the second cavity along the first direction, and a projection of the guide rail along the first direction is located in an overlapping part of the projection of the first cavity along the first direction and the projection of the second cavity along the first direction.

In some embodiments of the first aspect, the roof side rail structure further includes a mounting region configured for mounting the guide rail, the mounting region is located at a side of the guide rail mounting plate facing away from the first cavity; and a cross-sectional area of the first cavity along the first direction is greater than a cross-sectional area of the mounting region along the first direction.

In some embodiments of the first aspect, the roof side rail inner plate, the roof side rail reinforcement plate, the guide rail mounting plate, and the side outer plate are an integrally formed structure.

In some embodiments of the first aspect, a first connection portion between the side outer plate and the roof side rail reinforcement plate extends along the first direction, and an orthographic projection of the first connection portion along a second direction covers at least part of an orthographic projection of the guide rail along the second direction.

In some embodiments of the first aspect, the projection of the guide rail along the second direction is located in the projection of the first connection portion along the second direction.

In some embodiments of the first aspect, the guide rail mounting plate includes a first mounting plate and a second mounting plate; and the roof side rail reinforcement plate, the first mounting plate, the second mounting plate, and the roof side rail inner plate are connected end to end to form the first cavity.

In some embodiments of the first aspect, a support plate is arranged inside the first cavity; and
the support plate is connected between inner walls of the first cavity along the first direction,
and/or, the support plate is connected between inner walls of the first cavity along a second direction.

In some embodiments of the first aspect, a dimension of the first cavity along the first direction is denoted as h1 and satisfies: h1 ≥ 45 mm, a dimension of the first cavity along a second direction is denoted as h2 and satisfies: h2 ≥ 10 mm, and the second direction is perpendicular to the first direction.

In a second aspect, embodiments of the present invention further provide a vehicle body structure, which includes the roof side rail structure provided by any one of the above embodiments of the first aspect.

In a third aspect, embodiments of the present invention further provide a vehicle, which includes the vehicle body structure provided by the embodiment of the second aspect.

In the roof side rail structure, the vehicle body structure, and the vehicle provided by the present invention, on the one hand, along the first direction X, the projection of the first cavity at least partially overlaps the projection of the second cavity, which increases a cross-sectional area of an overall energy-absorbing cavity of the roof side rail structure through the superposition of the first cavity and the second cavity, and enables the roof side rail structure to withstand greater impact loads, thus effectively improving the structural strength of the roof side rail structure. On the other hand, along the first direction X, the projection of the first cavity at least partially overlaps the projection of the second cavity, and the projection of the guide rail is located in the overlapping part of the projection of the first cavity and the projection of the second cavity, which enables the first cavity and the second cavity to jointly protect the guide rail, thus making the guide rail less prone to deformation and damage under impact. In this way, the reliability of the vehicle is effectively improved.

The aforementioned description is merely a summary of the technical solutions of the present invention. To understand the technical means of the present invention more clearly for implementation in accordance with the content of the specification, and to make the above and other objectives, features, and advantages of the present invention more apparent and easier to understand, specific embodiments of the present invention are provided below.

### BRIEF DESCRIPTION OF THE DRAWINGS

Various other advantages and benefits will become apparent to those skilled in the art through reading the detailed description of preferred embodiments below. The accompanying drawings are only for the purpose of illustrating the preferred embodiments and are not intended to limit the present invention. Furthermore, throughout the accompanying drawings, the same reference symbol denotes the same component. In the accompanying drawings:
FIG. 1 is a schematic view of a roof side rail structure provided by some embodiments of the present invention.
FIG. 2 is a schematic cross-sectional view of a roof side rail structure taken along A-A provided by some embodiments of the present invention.
FIG. 3 is a schematic cross-sectional view of a connection means between a guide rail and a guide rail mounting plate in a roof side rail structure provided by some embodiments of the present invention.

References signs in the detailed description are as follows:
100 roof side rail structure;
10 roof side rail inner plate; 20 roof side rail reinforcement plate; 30 guide rail mounting plate; 301 mounting region; 31 first mounting plate; 32 second mounting plate; 40 guide rail; 50 first cavity; 60 side outer plate; 70 second cavity; 80 first connection portion; 90 support plate; X first direction; Y second direction.

### DETAILED DESCRIPTION

Embodiments of the technical solutions of the present invention will be described in detail below with reference to the accompanying drawings. The following embodiments are only for more clearly illustrating the technical solutions of the present invention and are therefore merely exemplary, and should not be used to limit the protection scope of the present invention.

It should be noted that, unless otherwise specified, technical terms or scientific terms used in embodiments of the present invention shall have the ordinary meaning understood by those skilled in the art to which embodiments of the present invention belong.

In the description of embodiments of the present invention, the orientation or position relationship indicated by the technical terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing embodiments of the present invention and simplifying the description, and does not indicate or imply that the referred device or element must have a specific orientation, and be constructed and operated in a specific orientation, so it cannot be understood as a limitation of embodiments of the present invention.

In addition, the technical terms such as "first" and "second" are only used for purpose of description, and cannot be understood as indicating or implying relative importance or implicitly indicating the number of indicated technical features. In the description of embodiments of the present invention, "a plurality of" means two or more, unless otherwise specifically defined.

In the description of embodiments of the present invention, unless otherwise expressly defined, terms such as "install/mount", "interconnect", "connect", "fix" shall be understood broadly, and may be, for example, fixed connections, detachable connections, or integral connections; may also be mechanical connections or electrical connections; may also be direct connections or indirect connections via intervening media; may also be inner communications or interactions of two elements. For those skilled in the art, the specific meaning of the above terms in embodiments of the present invention may be understood according to the specific situations.

In the description of embodiments of the present invention, unless otherwise expressly defined, a first feature "above/on/on top of" or "below/under/on bottom of" a second feature may include an embodiment in which the first feature is in direct contact with the second feature, or the first feature is in indirect contact with the second feature through an intermediate media. And, the first feature "above", "on", or "on top of" the second feature may include an embodiment in which the first feature is right or obliquely "above", "on", or "on top of" the second feature, or just means that the first feature is at a height higher than that of the second feature. The first feature "below", "under", or "on bottom of" the second feature may include an embodiment in which the first feature is right or obliquely "below", "under", or "on bottom of" the second feature, or just means that the first feature is at a height lower than that of the second feature.

With the rapid development of the economy and the automotive industry, demand for vehicle aesthetics and comfort is increasing. For this reason, B-pillarless vehicle models have been gaining growing popularity. For a vehicle, a B-pillar is a critical component that enhances safety of the vehicle, as the B-pillar may effectively prevent deformation of a passenger compartment during rollovers or overturns of the vehicle, thereby protecting occupants inside the vehicle.

The inventors of the present invention have noted that due to the elimination of the B-pillar structure, a roof side rail structure of the vehicle needs to withstand greater loads. Currently, most B-pillarless vehicle models are equipped with a sliding door. The layout requirements for a guide rail on the sliding door may result in an insufficient cavity space in the roof side rail structure to provide supporting force, thus leading to a lower structural strength of the roof side rail structure and consequently a lower vehicle safety.

The inventors of the present invention have found through research that by arranging the guide rail away from a roof side rail reinforcement plate along a first direction, a certain space is defined between the guide rail and the roof side rail reinforcement plate. This allows a first cavity to have a larger dimension in the first direction, in where the first cavity is formed by connecting a roof side rail inner plate, the roof side rail reinforcement plate, and a guide rail mounting plate end to end. This reduces the limitation imposed by the guide rail on the space available for the first cavity, so that the first cavity has a larger cross-sectional area along the first direction, thereby enabling the roof side rail to withstand greater loads. This may effectively improve the structural strength of the roof side rail and thereby enhance the vehicle safety.

To address the technical problems of the related art, embodiments of the present invention provide a roof side rail structure, a vehicle body structure, and a vehicle, which may effectively improve the structural strength of the roof side rail and thereby enhance the vehicle safety. The roof side rail structure provided by embodiments of the present invention will be introduced first below.

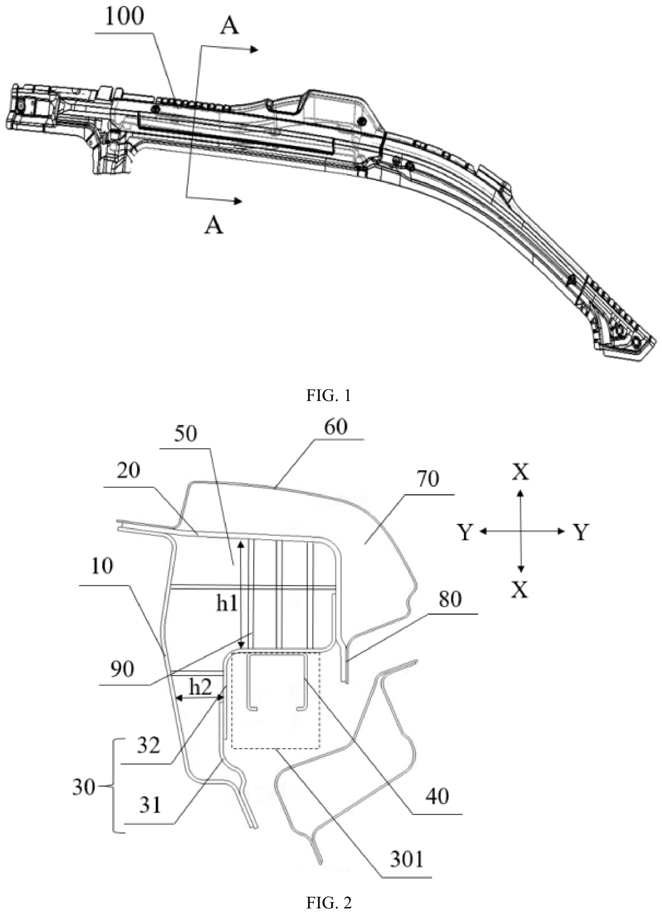

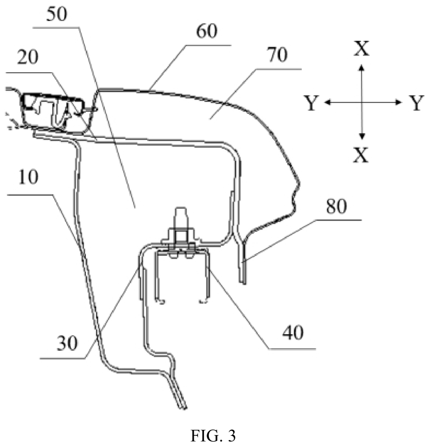

FIG. 1 is a schematic view of a roof side rail structure provided by some embodiments of the present invention; FIG. 2 is a schematic cross-sectional view of a roof side rail structure taken along A-A provided by some embodiments of the present invention; and FIG. 3 is a schematic cross-sectional view of a connection means between a guide rail and a guide rail mounting plate in a roof side rail structure provided by some embodiments of the present invention.

As shown in FIGS. 1 to 3, embodiments of the present invention provide a roof side rail structure 100. The roof side rail structure 100 includes a roof side rail inner plate 10, a roof side rail reinforcement plate 20, a guide rail mounting plate 30, a side outer plate 60, and a guide rail 40 arranged at the guide rail mounting plate 30. The roof side rail inner plate 10, the roof side rail reinforcement plate 20, and the guide rail mounting plate 30 are connected end to end to form a first cavity 50. The side outer plate 60 is bent along a direction facing away from the first cavity 50 and is connected to the roof side rail reinforcement plate 20 to form a second cavity 70. The guide rail 40 is located at a side of the guide rail mounting plate 30 facing away from the first cavity 50 along a first direction X. Along the first direction X, a projection of the first cavity 50 at least partially overlaps a projection of the second cavity 70, and a projection of the guide rail 40 is located in an overlapping part of the projection of the first cavity 50 and the projection of the second cavity 70.

In embodiments of the present invention, the roof side rail structure 100 may be a side rail structure at a top of a vehicle, and the first direction X may be understood as a height direction of the vehicle.

For example, an end of the roof side rail inner plate 10 is connected to an end of the roof side rail reinforcement plate 20, another end of the roof side rail inner plate 10 is connected to an end of the guide rail mounting plate 30, and another end of the roof side rail reinforcement plate 20 is connected to another end of the guide rail mounting plate 30. In this way, the roof side rail inner plate 10, the roof side rail reinforcement plate 20, and the guide rail mounting plate 30 are connected end to end, and the first cavity 50 is formed inside the roof side rail inner plate 10, the roof side rail reinforcement plate 20, and the guide rail mounting plate 30. The first cavity 50 is a main load-bearing cavity of the roof side rail structure 100. The larger a cavity space of the first cavity 50, the greater the load the first cavity 50 may withstand.

It should be noted that the roof side rail inner plate 10, the roof side rail reinforcement plate 20, and the guide rail mounting plate 30 may be connected end to end in a clockwise direction or in a counterclockwise direction. The roof side rail inner plate 10, the roof side rail reinforcement plate 20, and the guide rail mounting plate 30 each are an irregularly bent curved plate. The present invention does not limit the specific structural shapes and connection order of the roof side rail inner plate 10, the roof side rail reinforcement plate 20, and the guide rail mounting plate 30, which may be configured according to actual situations.

Optionally, the roof side rail inner plate 10, the roof side rail reinforcement plate 20, the guide rail mounting plate 30, and the guide rail 40 may all be made of a metal material, such as stainless steel, aluminum, or titanium. The connection means between the roof side rail inner plate 10, the roof side rail reinforcement plate 20, the guide rail mounting plate 30, and the guide rail 40 may include, but are not limited to, welding, riveting, or bolt connection.

For example, an end of the side outer plate 60 is connected to an end of the roof side rail reinforcement plate 20, and another end of the side outer plate 60 is connected to another end of the roof side rail reinforcement plate 20. Furthermore, the side outer plate 60 is bent along the direction facing away from the first cavity 50, so that the second cavity 70 is formed between the side outer plate 60 and the roof side rail reinforcement plate 20.

As mentioned above, the end of the roof side rail reinforcement plate 20 is also connected to the roof side rail inner plate 10. At a connection point of the end of the roof side rail reinforcement plate 20 connected to the roof side rail inner plate 10, the side outer plate 60, the roof side rail reinforcement plate 20, and the roof side rail inner plate 10 form a sandwich structure with the roof side rail reinforcement plate 20 located in a middle of the sandwich structure, and the side outer plate 60 and the roof side rail inner plate 10 are located at two sides of the roof side rail reinforcement plate 20 in a thickness direction of the roof side rail reinforcement plate 20. Similarly, the another end of the roof side rail reinforcement plate 20 is also connected to the guide rail mounting plate 30. At a connection point of the another end of the roof side rail reinforcement plate 20 connected to the guide rail mounting plate 30, the side outer plate 60, the roof side rail reinforcement plate 20, and the roof side rail inner plate 10 form a sandwich structure with the roof side rail reinforcement plate 20 located in a middle of the sandwich structure, and the side outer plate 60 and the guide rail mounting plate 30 located at two sides of the roof side rail reinforcement plate 20 in a thickness direction of the roof side rail reinforcement plate 20. The above arrangement may improve the structural strength at the connection points of the side outer plate 60, the roof side rail reinforcement plate 20, the roof side rail inner plate 10, and the guide rail mounting plate 30, thereby improving the overall reliability of the roof side rail structure 100.

The side outer plate 60 is bent along the direction facing away from the first cavity 50, so that the second cavity 70 is located at a side of the first cavity 50 facing away from the guide rail 40. The second cavity 70 also has load-bearing capacity. The larger a cavity space of the second cavity 70, the greater the load the second cavity 70 may withstand. Meanwhile, the second cavity 70 may also improve a bending and torsional strength of the roof side rail structure 100.

Optionally, the side outer plate 60 may be made of a metal material, such as stainless steel, aluminum, or titanium. The side outer plate 60 is an irregularly bent curved plate. The connection means between the side outer plate 60 and the roof side rail reinforcement plate 20, and the connection means between the guide rail mounting plate 30 and the guide rail 40 may include, but are not limited to, welding, riveting, or bolt connection.

The guide rail 40 is mounted at the guide rail mounting plate 30. The guide rail 40 occupies a part of the space in the roof side rail structure 100, thereby imposing certain limitations on the space available for arranging the first cavity 50. In embodiments of the present invention, the guide rail 40 is located on the side of the first cavity 50 facing away from the second cavity 70 along the first direction X. That is, the guide rail 40 is arranged facing away from the roof side rail reinforcement plate 20 along the first direction X. In other words, the roof side rail reinforcement plate 20 and the guide rail 40 are located at two opposite sides of the first cavity 50 in the first direction X, so that a certain space is defined between the guide rail 40 and the roof side rail reinforcement plate 20, which allows the first cavity 50 to have a larger dimension in the first direction X. It should be noted that in embodiments of the present invention, after the roof side rail inner plate 10, the roof side rail reinforcement plate 20, and the guide rail mounting plate 30 are connected, the guide rail 40 is then mounted at the guide rail mounting plate 30, preventing the guide rail 40 from blocking a connection point between the roof side rail reinforcement plate 20 and the guide rail mounting plate 30 and causing connection difficulties. As an example, referring to FIG. 3, the guide rail 40 and the guide rail mounting plate 30 may be connected by bolts.

Moreover, in embodiments of the present application, along the first direction X, the projection of the guide rail 40 is located in the overlapping part of the projection of the first cavity 50 and the projection of the second cavity 70. In other words, the first cavity 50 and the second cavity 70 may jointly protect the guide rail 40, thus making the guide rail 40 less prone to deformation and damage under impact.

Optionally, the roof side rail inner plate 10, the roof side rail reinforcement plate 20, the guide rail mounting plate 30, and the side outer plate 60 may all be made of a high-strength steel such as Q390 steel, Q420 steel, Q460 steel, Q550 steel, or Q690 steel, so as to further improve the overall structural strength of the roof side rail structure 100.

In the above technical solution, on the one hand, along the first direction X, the projection of the first cavity 50 at least partially overlaps the projection of the second cavity 70, which increases a cross-sectional area of an overall energy-absorbing cavity of the roof side rail structure 100 through the superposition of the first cavity 50 and the second cavity 70, and enables the roof side rail structure 100 to withstand greater impact loads, thus effectively improving the structural strength of the roof side rail structure 100; and on the other hand, along the first direction X, the projection of the first cavity 50 at least partially overlaps the projection of the second cavity 70, and the projection of the guide rail 40 is located in the overlapping part of the projection of the first cavity 50 and the projection of the second cavity 70, which enables the first cavity 50 and the second cavity 70 to jointly protect the guide rail 40, thus making the guide rail 40 less prone to deformation and damage under impact. In this way, the reliability of the vehicle is effectively improved.

In some embodiments, a dimension of the first cavity 50 along the first direction X is denoted as h1, which satisfies: h1 ≥ 45 mm, a dimension of the first cavity 50 along a second direction Y is denoted as h2, which satisfies: h2 ≥ 10 mm, and the second direction Y is perpendicular to the first direction X.

As mentioned above, the roof side rail structure 100 in embodiments of the present invention may be a side rail structure at a top of the vehicle. The first direction X may be understood as a height direction of the vehicle, and the second direction Y is perpendicular to the first direction X, i.e., the second direction Y may be understood as a width direction of the vehicle.

In the above-mentioned embodiments, the dimension h1 of the first cavity 50 along the first direction X may be understood as a height of the first cavity 50, and the dimension h2 of the first cavity 50 along the second direction Y can be understood as a thickness of the first cavity 50.

Setting the dimension h1 of the first cavity 50 within the above range may provide a larger height for the first cavity 50, which may enhance the load-bearing capacity of the first cavity 50 along the first direction X, thereby further improving the structural strength of the roof side rail.

Setting the dimension h2 of the second cavity 70 within the above range may provide a larger width for the first cavity 50, which may enhance the load-bearing capacity of the first cavity 50 along the second direction Y, thereby further improving the structural strength of the roof side rail.

For example, the dimension h1 of the first cavity 50 may be, but is not limited to, 45 mm, 50 mm, 70 mm, or 90 mm. The dimension h2 of the first cavity 50 may be, but is not limited to, 10 mm, 15 mm, 20 mm, or 40 mm.

In some embodiments, the roof side rail structure 100 further includes a mounting region 301 configured for mounting the guide rail 40. The mounting region 301 is located at the side of the guide rail mounting plate 30 facing away from the first cavity 50. A cross-sectional area of the first cavity 50 along the first direction X is greater than a cross-sectional area of the mounting region 301 along the first direction X.

For example, the mounting region 301 may be understood as a part of the space in the roof side rail structure 100 occupied by the guide rail 40. It may be understood that the larger the cross-sectional area of the mounting region 301 along the first direction X, the more space the guide rail 40 occupies in the roof side rail structure 100, and consequently, the less space is available for arranging the first cavity 50. Similarly, the smaller the cross-sectional area of the mounting region 301 along the first direction X, the less space the guide rail 40 occupies in the roof side rail structure 100, and consequently, the more space is available for arranging the first cavity 50.

In the above technical solution, by setting the cross-sectional area of the first cavity 50 along the first direction X to be greater than the cross-sectional area of the mounting region 301 along the first direction X, the space occupied by the mounting region 301 in the roof side rail structure 100 may be reduced, thereby increasing the space available for arranging the first cavity 50 which further improves the load-bearing capacity of the first cavity 50, and further enhances the structural strength of the roof side rail.

In some embodiments, the roof side rail inner plate 10, the roof side rail reinforcement plate 20, the guide rail mounting plate 30, and the side outer plate 60 are an integrally formed structure.

For example, the roof side rail inner plate 10, the roof side rail reinforcement plate 20, the guide rail mounting plate 30, and the side outer plate 60 may be integrally formed through a roll forming process, which on the one hand, eliminates the need for additional connection processes to connect the roof side rail inner plate 10, the roof side rail reinforcement plate 20, the guide rail mounting plate 30, and the side outer plate 60, thus simplifying the manufacturing process of the roof side rail structure 100. Meanwhile, compared to connecting the roof side rail inner plate 10, the roof side rail reinforcement plate 20, the guide rail mounting plate 30, and the side outer plate 60 through additional connection processes, the integrally formed roof side rail inner plate 10, roof side rail reinforcement plate 20, guide rail mounting plate 30, and side outer plate 60 have higher connection strength, which may further improve the overall structural strength of the roof side rail structure 100 and further enhance the reliability of the vehicle.

In some embodiments, a first connection portion 80 between the side outer plate 60 and the roof side rail reinforcement plate 20 extends along the first direction X. A projection of the first connection portion 80 along the second direction Y covers at least part of a projection of the guide rail 40 along the second direction Y.

The first connection portion 80 between the side outer plate 60 and the roof side rail reinforcement plate 20 is a connection point at a side closer to the guide rail 40. The first connection portion 80 extends along the first direction X. As mentioned above, the first direction X may be understood as the height direction of the vehicle, and the second direction Y may be understood as the width direction of the vehicle.

It may be understood that the guide rail 40 is configured to mount the sliding door of the vehicle to enable the sliding door to slide. In embodiments of the present invention, extension directions of the roof side rail structure 100 and various plates and the guide rail 40, etc. of the roof side rail structure 100 are a length direction of the vehicle. The projection of the first connection portion 80 along the second direction Y covers the at least part of the projection of the guide rail 40 along the second direction Y. That is, along the second direction Y, the first connection portion 80 may cover at least part of the guide rail 40. For example, along the second direction Y, the first connection portion 80 may cover a part of the guide rail 40, or cover the entire guide rail.

In the above technical solution, by arranging the first connection portion 80 between the side outer plate 60 and the roof side rail reinforcement plate 20 to extend along the first direction X, and enabling the first connection portion 80 to cover the at least part of the guide rail 40 along the second direction Y, on the one hand, the covering of the guide rail 40 by the first connection portion 80 prevents the guide rail 40 from being exposed to the user's view, which may enhance the aesthetics of the vehicle; on the other hand, the covering of the guide rail 40 by the first connection portion 80 may also protect the guide rail 40, and reduce the occurrence of damage to the sliding door caused by external objects impacting the guide rail 40, thereby improving the operational reliability of the guide rail 40.

In some embodiments, along the second direction Y, the projection of the guide rail 40 is located in the projection of the first connection portion 80, so that the first connection portion 80 may cover the entire guide rail 40 along the second direction Y, thus further improving the aesthetics of the vehicle and the operational reliability of the guide rail.

In some embodiments, at least one of the roof side rail inner plate 10, the roof side rail reinforcement plate 20, the guide rail mounting plate 30, or the side outer plate 60 is provided with a reinforcing rib.

The reinforcing rib may improve the structural strength of the roof side rail inner plate 10, the roof side rail reinforcement plate 20, the guide rail mounting plate 30, or the side outer plate 60 themselves. For example, the reinforcing rib may protrude from a side surface, close to the first cavity 50, of the roof side rail inner plate 10, the roof side rail reinforcement plate 20, the guide rail mounting plate 30 or the side outer plate 60; or the reinforcing rib may protrude from a side surface, facing away from the first cavity 50, of the roof side rail inner plate 10, the roof side rail reinforcement plate 20, the guide rail mounting plate 30 or the side outer plate 60.

In some optional embodiments, the reinforcing rib and the roof side rail inner plate 10, the roof side rail reinforcement plate 20, the guide rail mounting plate 30, or the side outer plate 60 are an integrally formed structure. That is, the reinforcing rib may be integrally formed by a stamping process, which is simple and does not require additional materials.

In the above technical solution, by providing the reinforcing rib on at least one of the roof side rail inner plate 10, the roof side rail reinforcement plate 20, the guide rail mounting plate 30, or the side outer plate 60, the reinforcing rib may reduce deformation of the roof side rail inner plate 10, the roof side rail reinforcement plate 20, the guide rail mounting plate 30 or the side outer plate 60, improve the compressive strength of the roof side rail inner plate 10, the roof side rail reinforcement plate 20, the guide rail mounting plate 30 or the side outer plate 60, and thereby further enhance the structural strength of the roof side rail.

In some embodiments, the guide rail mounting plate 30 includes a first mounting plate 31 and a second mounting plate 32. The roof side rail reinforcement plate 20, the first mounting plate 31, the second mounting plate 32, and the roof side rail inner plate 10 are connected end to end to form the first cavity 50.

For example, the guide rail mounting plate 30 includes the first mounting plate 31 and the second mounting plate 32 independently connected to each other. An end of the roof side rail inner plate 10 is connected to an end of the roof side rail reinforcement plate 20, another end of the roof side rail inner plate 10 is connected to an end of the first mounting plate 31, another end of the first mounting plate 31 is connected to an end of the second mounting plate 32, and another end of the second mounting plate 32 is connected to another end of the roof side rail reinforcement plate 20. In this way, the roof side rail reinforcement plate 20, the first mounting plate 31, the second mounting plate 32, and the roof side rail inner plate 10 are connected end to end, and the first cavity 50 is formed inside the roof side rail reinforcement plate 20, the first mounting plate 31, the second mounting plate 32, and the roof side rail inner plate 10.

It should be noted that the roof side rail reinforcement plate 20, the first mounting plate 31, the second mounting plate 32, and the roof side rail inner plate 10 may be connected end to end in a clockwise direction or in a counterclockwise direction. The first mounting plate 31 and the second mounting plate 32 each are an irregularly bent curved plate. The present invention does not limit the specific structural shapes and order of the first mounting plate 31 and the second mounting plate 32, which may be configured according to actual situations.

In the above technical solution, by configuring the guide rail mounting plate 30 as the first mounting plate 31 and the second mounting plate 32 independently connected to each other, a boundary shape of the roof side rail structure 100 may be arranged more flexibly, thus enabling the roof side rail structure 100 to adapt to more structural layout requirements and improving the operational flexibility of the roof side rail structure 100.

In some embodiments, a support plate 90 is arranged inside the first cavity 50. The support plate 90 is connected between inner walls of the first cavity 50 along the first direction X, and/or the support plate 90 is connected between inner walls of the first cavity 50 along the second direction Y.

The support plate 90 may provide a supporting force between the inner walls of the first cavity 50. For example, the support plate 90 may be connected between the inner walls of the first cavity 50 along the first direction X, or the support plate 90 may be connected between the inner walls of the first cavity 50 along the second direction Y, or the support plate 90 may be connected both between the inner walls of the first cavity 50 along the first direction X and between the inner walls of the first cavity 50 along the second direction Y. In a case that the support plate 90 is connected between the inner walls of the first cavity 50 along the first direction X, the support plate 90 supports between the inner walls of the first cavity 50 along the first direction X, and the support plate 90 may provide a supporting force between the inner walls of the first cavity 50 along the first direction X. In a case that the support plate 90 is connected between the inner walls of the first cavity 50 along the second direction Y, the support plate 90 supports between the inner walls of the first cavity 50 along the second direction Y, and the support plate 90 may provide a supporting force between the inner walls of the first cavity 50 along the second direction Y.

Optionally, the support plate 90 may be made of, but is not limited to, a metal material such as stainless steel, aluminum, or titanium. The connection means between the support plate 90 and the inner walls of the first cavity 50 may include, but is not limited to, welding, riveting, or bolt connection.

In the above technical solution, by arranging the support plate 90 between the inner walls of the first cavity 50, the support plate 90 may provide a supporting force between the inner walls of the first cavity 50, thereby further improving the load-bearing capacity of the first cavity 50 and further enhancing the structural strength of the roof side rail.

According to some embodiments of the present invention, the present invention further provides a vehicle body structure, which includes the roof side rail structure 100 provided by any one of the above embodiments.

It may be understood that the body structure includes the roof side rail structure 100 provided by embodiments of the present invention. For specific details of the roof side rail structure 100, reference may be made to the corresponding descriptions of the roof side rail structure 100 in the above embodiments of the present invention, which are not repeated herein for brevity.

According to some embodiments of the present invention, the present invention further provides a vehicle, which includes the body structure provided by the above embodiments.

It should be noted that embodiments of the present invention and the features in embodiments may be combined with each other without conflict.

Finally, it should be noted that the above embodiments are only used to illustrate the technical solutions of the present invention, but not to limit them; although the present invention has been explained in detail with reference to the aforementioned embodiments, those skilled in the art should understand that they may still modify the technical solutions mentioned in the aforementioned embodiments, or equivalently replace part or all of the technical features thereof; and these modifications or replacements do not cause the essence of the corresponding technical solutions to deviate from the scope of the technical solutions of embodiments of the present invention, and they should all be covered in the scope of the claims and the description of the present invention. In particular, as long as there is no structural conflict, various technical features mentioned in the various embodiments may be combined in any manner. The present invention is not limited to the specific embodiments disclosed herein, but includes all technical solutions falling within the scope of the claims.

## Claims

1. A roof side rail structure, comprising: a roof side rail inner plate, a roof side rail reinforcement plate, a guide rail mounting plate, a side outer plate, and a guide rail arranged to the guide rail mounting plate; wherein the roof side rail inner plate, the roof side rail reinforcement plate, and the guide rail mounting plate are connected end to end to form a first cavity; the side outer plate is bent in a direction facing away from the first cavity and is connected to the roof side rail reinforcement plate to form a second cavity; and the guide rail is located at a side of the guide rail mounting plate facing away from the first cavity along a first direction,
wherein a projection of the first cavity along the first direction at least partially overlaps a projection of the second cavity along the first direction, and a projection of the guide rail along the first direction is located in an overlapping part of the projection of the first cavity along the first direction and the projection of the second cavity along the first direction.

2. The roof side rail structure according to claim 1, further comprising a mounting region configured for mounting the guide rail, wherein the mounting region is located at a side of the guide rail mounting plate facing away from the first cavity; and a cross-sectional area of the first cavity along the first direction is greater than a cross-sectional area of the mounting region along the first direction.

3. The roof side rail structure according to claim 1 or 2, wherein the roof side rail inner plate, the roof side rail reinforcement plate, the guide rail mounting plate, and the side outer plate are integrally formed.

4. The roof side rail structure according to any one of claims 1 to 3, wherein a first connection portion between the side outer plate and the roof side rail reinforcement plate extends along the first direction, and a projection of the first connection portion along a second direction covers at least part of a projection of the guide rail along the second direction.

5. The roof side rail structure according to claim 4, wherein the projection of the guide rail along the second direction is located in the projection of the first connection portion along the second direction.

6. The roof side rail structure according to any one of claims 1 to 5, wherein the guide rail mounting plate comprises a first mounting plate and a second mounting plate; and the roof side rail reinforcement plate, the first mounting plate, the second mounting plate, and the roof side rail inner plate are connected end to end to form the first cavity.

7. The roof side rail structure according to any one of claims 1 to 6, wherein a support plate is arranged inside the first cavity; and
wherein the support plate is connected between inner walls of the first cavity along the first direction; and/or
the support plate is connected between inner walls of the first cavity along a second direction.

8. The roof side rail structure according to any one of claims 1 to 7, wherein a dimension of the first cavity along the first direction is denoted as h1, wherein h1 ≥ 45 mm, a dimension of the first cavity along a second direction is denoted as h2, wherein h2 ≥ 10 mm, and the second direction is perpendicular to the first direction.

9. A vehicle body structure, comprising the roof side rail structure according to any one of claims 1 to 8.

10. A vehicle, comprising the vehicle body structure according to claim 9.
